# FASCICULE DE BREVET EUROPEEN

(11) **EP 2 678 578 B1**
(45) Date de publication et mention de la délivrance du brevet: **20.04.2016**
(21) Numéro de dépôt: 12708883.9
(22) Date de dépôt: 08.02.2012
(51) Int. Cl.: F16D 55/224, F16D 59/02, F16D 65/14, F16D 65/02, F16D 65/16, F16D 121/20, F16D 121/22

(54) **DISPOSITIF DE FREINAGE ELECTRIQUE D'UN ARBRE D'ENTRAINEMENT**
VORRICHTUNG ZUM ELEKTRISCHEN BREMSEN EINER ANTRIEBSWELLE
DEVICE FOR ELECTRICALLY BRAKING A DRIVE SHAFT

(30) Priorité: 23.02.2011 FR 1100540
(43) Date de publication de la demande: 01.01.2014
(73) Titulaire: Sofineco, 69150 Decines (FR)
(72) Inventeur: PANSERI, Anne Sophie, F-69250 Montanay (FR); POYET, Armand, F-69009 Lyon (FR); SIMON, Romain, F-69300 Caluire (FR)
(74) Mandataire: Jeannet, Olivier
(86) Numéro de dépôt international: PCT/FR2012/050275
(87) Numéro de publication internationale: WO 2012/114015

(56) Documents cités:
- EP-A1- 0 696 689
- EP-A2- 0 935 082
- EP-A2- 1 715 564
- DE-A1- 2 133 202

## Description

La présente invention est relative à un dispositif de freinage électrique d'un arbre d'entrainement pouvant s'adapter par exemple à un arbre d'entrainement d'une porte de manutention à rideau souple à enroulement ou à empilement.

Le document EP 0 696 689 A1 montre un dispositif de freinage d'après le préambule de la revendication 1.

On connait à ce jour des systèmes mécaniques possédant un freinage ave actionneur électrique, ce freinage est alors appelé électromagnétique.
Le cas étudié est celui des freins dit à manque de courant ou de sécurité, ceux-la même qui doivent freiner lors d'une absence d'alimentation électrique. Le plus souvent, pour des raisons économiques, le système est composé de disques ainsi que de patins en matière à haut coefficient de friction.
Ces patins peuvent avoir la forme de secteur de disque (dans le cas de frein dit à mâchoires) ou bien être la forme de disque (dans le cas de frein dit à disque). Le freinage est alors effectué au moyen de ressorts faisant pression sur ces patins.
Le freinage est annulé par l'action magnétique d'un électro aimant qui agit en opposition à ces ressorts lorsqu'il est alimenté en énergie électrique.
Compte tenu que les possibilités des actionneurs (ventouses magnétiques ou électro-aimants) ne permettent pas de grands déplacements lors de leurs fonctionnements, un entrefer est alors défini, obligeant à un maximum de déplacements des mâchoires de seulement quelques dixièmes de millimètre (en général 0.5mm maximum).

Ce principe réclame alors un positionnement du disque et des mâchoires très précis pour un bon fonctionnement entre l'arbre d'entrainement et l'organe de freinage.
Le dispositif de freinage électrique suivant la présente invention a pour objet de perfectionner ces types de freinage pour pouvoir les utiliser sur des structures ne possédant pas ou ne pouvant pas posséder un positionnement précis des différents éléments mécaniques constituant l'organe de freinage par rapport à l'arbre d'entrainement.

Le dispositif de freinage électrique suivant la présente invention est alors de guider l'organe de freinage par rapport au disque de freinage par l'intermédiaire de moyens de fixation assurant des degrés de liberté afin de compenser les désalignements et les défauts de forme du disque de freinage lors de son entrainement en rotation.

Le dispositif de freinage électrique suivant la présente invention comporte un organe de freinage qui est constitué d'une part de mâchoires électriques et d'au moins un patin glissant montés à proximité du disque de freinage de manière que ce dernier traverse au moins partiellement lesdites mâchoires électriques et patin glissant, et d'autre part de moyens de fixation des mâchoires électriques et du patin glissant sur le châssis fixe assurant auxdites mâchoires et au dit patin des degrés de liberté obtenus par la combinaison de différentes liaisons dites « liaison appui plan AP », « liaison ponctuelle LP » et « liaison linéaire annulaire LA » afin de compenser les désalignements du disque de freinage lors de son entrainement en rotation.

Le dispositif de freinage électrique suivant la présente invention comporte un organe de freinage comprenant une platine sur laquelle sont agencés les mâchoires électriques et les patins glissants, tandis que ladite platine est guidée et retenue par rapport au châssis par l'intermédiaire des différentes liaisons dites « liaison ponctuelle LP » et « liaison linéaire annulaire LA » des moyens de fixation.

Le dispositif de freinage électrique suivant la présente invention comporte une liaison dite « liaison ponctuelle LP » qui est réalisée par l'intermédiaire d'un premier doigt solidaire du châssis s'étendant perpendiculairement à ce dernier et suivant une direction horizontale et parallèle à l'axe du disque de freinage de manière à coopérer avec une ouverture oblongue en forme de fourchette ménagée dans la partie supérieure de la platine.

Le dispositif de freinage électrique suivant la présente invention comporte une liaison dite « liaison linéaire annulaire LA » qui est constituée d'un second doigt solidaire du châssis s'étendant perpendiculairement à ce dernier et suivant une direction horizontale et parallèle à l'axe du disque de freinage et d'une rotule percée en son milieu et agencée à l'intérieur d'un alésage ménagé dans la partie inférieure de la platine de manière que ladite rotule vienne autour du second doigt.

Le dispositif de freinage électrique suivant la présente invention comporte une liaison dite « liaison appui plan AP » qui est obtenue par le montage des patins glissants sur la platine lesdits patins étant en contact ajusté et frottant avec le disque de freinage de manière à assurer un guidage et un positionnement de l'entrefer des mâchoires électriques par rapport à la position du disque de freinage lors de son entrainement en rotation.

Le dispositif de freinage électrique suivant la présente invention comporte des patins glissants comprenant chacun une rainure traversée par le disque de freinage.

Le dispositif de freinage électrique suivant la présente invention comporte des patins glissants comprenant chacun une rainure qui est ajustée avec un jeu de fonctionnement compris entre 0,1 mm et 3 mm par rapport au disque de freinage solidaire de l'arbre d'entrainement.

Le dispositif de freinage électrique suivant la présente invention comporte un arbre d'entrainement qui est guidé axialement dans un châssis fixe constitué par les montants latéraux d'une porte de manutention à rideau souple pour assurer les déplacements de ce dernier entre une position d'ouverture et une position de fermeture.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figure 1 est une vue schématique représentant la combinaison des différentes liaisons linéaires annulaires, ponctuelles et appui plan permettant de réaliser un dispositif de freinage électrique susceptible de compenser les désalignements et les défauts de forme d'un disque de freinage lors de son entrainement en rotation suivant la présente invention.
Figure 2 est une vue en perspective éclatée montrant l'ensemble des éléments constituant le dispositif de freinage électrique suivant la présente invention.

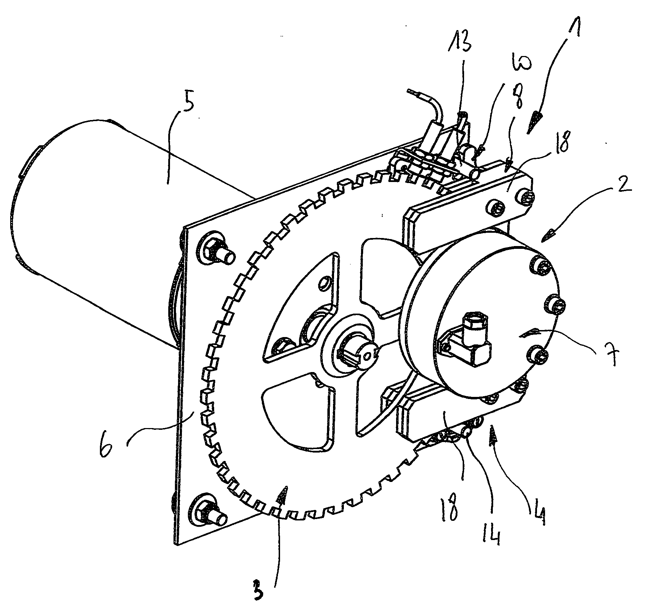

Figures 3 et 4 sont des vues en perspective illustrant le dispositif de freinage électrique suivant la présente invention.

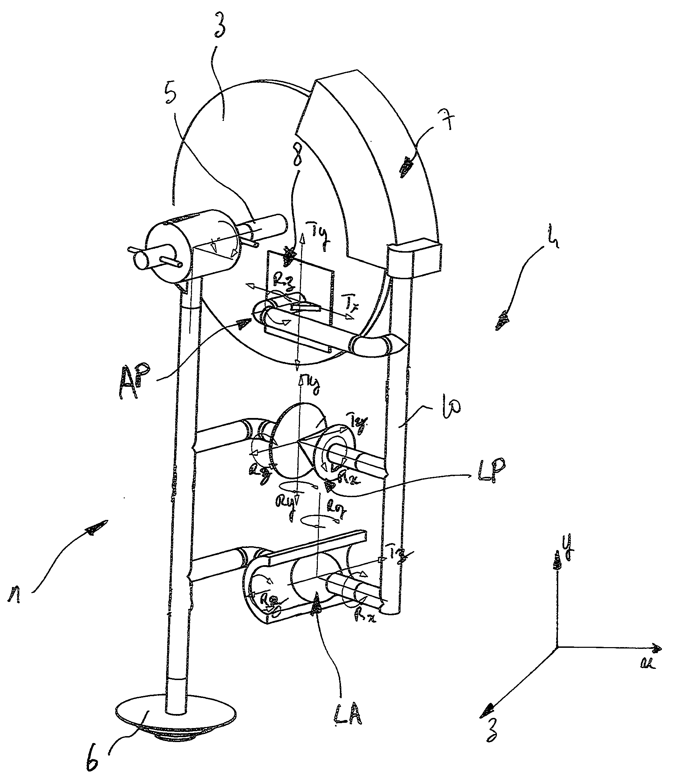

On a représenté en figure 1 une vue schématique d'un dispositif de freinage électrique 1 suivant la présente invention qui a pour objet de perfectionner le guidage d'un organe de freinage 2 par rapport à un disque de freinage 3 par l'intermédiaire de moyens de fixation 4 qui assurent des degrés de liberté permettant de compenser les désalignements et les défauts de forme dudit disque de freinage 3 lors de son entrainement en rotation.

Les moyens de fixation 4 sont constitués d'une combinaison de différentes liaisons AP, LP, LA qui peuvent être par exemple, montées en parallèle pour pouvoir réaliser les degrés de liberté nécessaires à la compensation des désalignements du disque de freinage 3 lors de son entrainement en rotation au moyen d'un arbre d'entrainement 5 guidé axialement à chaque extrémité dans un châssis 6.

Les moyens de fixation 4 permettent d'assurer aux mâchoires électriques 7 du dispositif de freinage électrique 1 des degrés de liberté obtenus par la combinaison des trois différentes liaisons AP, LP, LA afin de compenser les désalignements du disque de freinage 3 lors de son entrainement en rotation.

Les moyens de fixation 4 sont donc constitués d'une première liaison dite « liaison appui plan AP », permettant par rapport à un repère commun x, y, z aux trois liaisons, trois degrés de liberté à savoir deux translations Tx, Ty et une rotation suivant Rz.

Les moyens de fixation 4 sont constitués d'une seconde liaison dite « liaison ponctuelle LP », permettant par rapport au repère commun x, y, z cinq degrés de liberté à savoir deux translations Ty, Tz et trois rotations suivant Rx, Ry et Rz.

Enfin les moyens de fixation 4 sont constitués d'une troisième liaison dite « liaison linéaire annulaire LA », permettant par rapport au repère commun x, y, z quatre degrés de liberté à savoir une translation Tz et trois rotations suivant Rx, Ry et Rz.

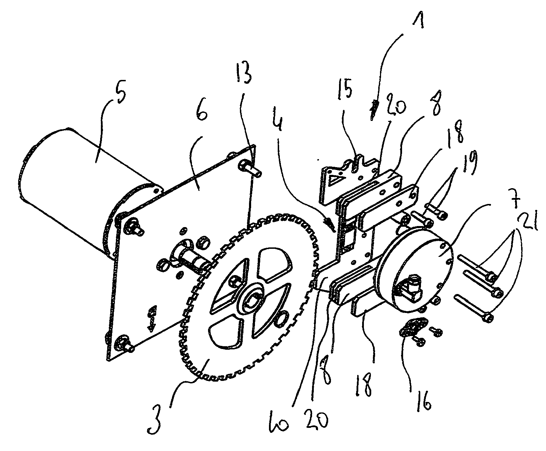

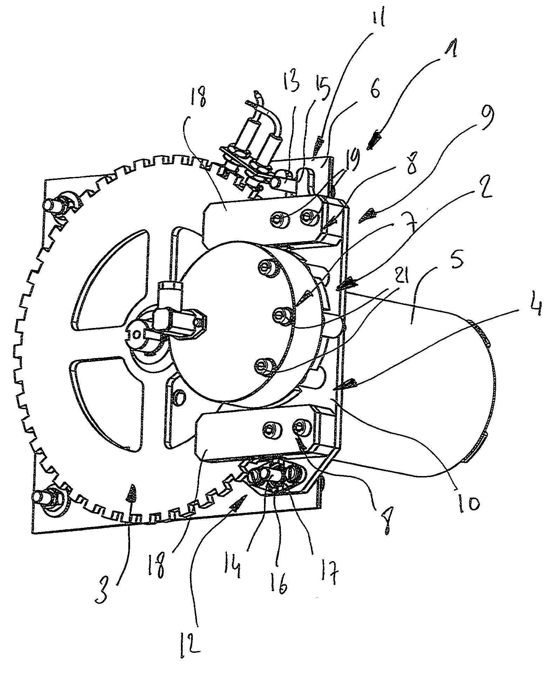

On a montré en figures 1 à 3 un exemple de réalisation des moyens de fixation 4 du dispositif de freinage électrique 1 suivant la présente invention qui a pour objet de perfectionner le guidage d'un organe de freinage 2 par rapport à un disque de freinage 3 et d'assurer des degrés de liberté permettant de compenser les désalignements dudit disque de freinage 3 lors de son entrainement en rotation.

Le dispositif de freinage 1 est monté au bout d'un arbre d'entrainement 5 guidé axialement à chaque extrémité dans un châssis 6 qui peut être par exemple et de manière non limitative celui d'un montant vertical et latéral d'une porte de manutention à rideau souple.

Ainsi, l'une au moins des extrémités de l'arbre d'entrainement 5 traversant le châssis 6 coopère avec un disque de freinage 3 qui peut être par exemple, cannelé sur sa périphérie.

Le dispositif de freinage 1 comporte un organe de freinage 2 comprenant une platine 10 agencée sur le châssis 6 par l'intermédiaire des secondes et troisièmes liaisons dite « liaison linéaire annulaire LA » et « liaison ponctuelle LP » des moyens de fixation 4.

L'organe de freinage 2 comporte au moins une mâchoire électrique 7 fixée sur la platine 10 de manière que cette dernière soit montée à proximité du disque de freinage 3 afin que ledit disque traverse au moins partiellement lesdites mâchoires électriques.

La première liaison dite « liaison appui plan AP » peut être constituée de patins glissants 8 qui sont disposés d'une part au-dessus et au dessous des mâchoires électriques 7 et d'autre part à proximité du disque de freinage 3 afin que ledit disque traverse au moins partiellement lesdits patins glissants.

A titre d'exemple non limitatif, la liaison dite « liaison ponctuelle LP » peut être réalisée par l'intermédiaire d'un premier doigt 13 solidaire du châssis 6 s'étendant perpendiculairement à ce dernier et suivant une direction horizontale et parallèle à l'axe du disque de freinage 3 de manière à coopérer avec une ouverture oblongue en forme de fourchette 15 ménagée dans la partie supérieure de la platine 10.

En ce qui concerne la liaison dite « liaison linéaire annulaire LA » cette dernière peut être constituée d'un second doigt 14 solidaire du châssis 6 s'étendant perpendiculairement à ce dernier et suivant une direction horizontale et parallèle à l'axe du disque de freinage 3. Autour du second doigt 14 est disposée une rotule 16 percée en son milieu et agencée à l'intérieur d'un alésage 17 ménagé dans la partie inférieure de la platine 10.

Ainsi, les liaisons dites « liaison linéaire annulaire LA » et « liaison ponctuelle LP » permettent à la platine 10 guidée autour des doigts 13, 14 de se déplacer librement par rapport au châssis 6 d'une part suivant un basculement autour de la rotule 16 et d'autre part suivant un déplacement latéral le long des doigts 13, 14 en se rapprochant et/ou en s'éloignant du châssis 6.

Le basculement de la platine 10 autour de la rotule 16 permet à cette dernière que sa partie supérieure au niveau de la fourchette 15 s'incline soit en direction du châssis 6 soit dans une direction s'éloignant dudit châssis.

Le déplacement latéral permet à la platine 10 de glisser ou de coulisser le long des doigts 13, 14 de manière à se déplacer dans un plan parallèle en se rapprochant et/ ou en s'éloignant du châssis 6.

La combinaison de ces déplacements assure à la platine 10 solidaire des mâchoires électriques 7 et des patins glissants 8 les degrés de liberté des liaisons dites « liaison linéaire annulaire LA » et « liaison ponctuelle LP » afin de pouvoir compenser les désalignements et les défauts de forme du disque de freinage 3 lors de son entrainement en rotation.

En ce qui concerne la liaison dite « liaison appui plan AP » cette dernière est par exemple obtenue par le montage des patins glissants 8 sur la platine 10 qui sont en contact ajusté et frottant avec le disque de freinage 3 de manière à assurer un guidage et un positionnement de l'entrefer des mâchoires électriques 7 par rapport à la position du disque de freinage 3 lors de son entrainement en rotation.

Les patins glissants 8 comprennent chacun une rainure 20 traversée par le disque de freinage 3, ladite rainure étant ajustée avec un jeu de fonctionnement suffisant qui peut être compris entre 0,1 mm et 3 mm par rapport au disque de freinage 3 solidaire de l'arbre d'entrainement 5.

Dans cet exemple de réalisation chaque patin glissant 8 est fixé sur la platine 10 par l'intermédiaire d'une plaque 18 et d'écrous 19 permettant de prendre en sandwich ledit patin glissant entre ladite platine et ladite plaque.

Egalement, dans cet exemple de réalisation, l'organe de freinage 2 comporte un patin glissant 8 de part et d'autre des mâchoires électriques 7 c'est-à-dire l'une au dessus et l'autre en dessous, sachant que les mâchoires électriques 7 sont portées par le même axe horizontal que celui du disque de freinage 3.

Les mâchoires électriques 7 sont fixées par exemple sur la platine 10 directement au moyen de vis de serrage 21 venant s'ancrer dans ladite platine.

Il doit d'ailleurs être entendu que la description qui précède n'a été donnée qu'à titre d'exemple, et qu'elle ne limite nullement le domaine de l'invention dont on ne sortirait pas en remplaçant les détails d'exécution décrits par tout autre équivalent.

## Revendications

1. Dispositif de freinage électrique d'un arbre d'entrainement (5) guidé dans un châssis fixe (6) et dont l'une au moins des extrémités dudit arbre est solidaire d'un disque de freinage (3), **caractérisé en ce qu'**il comporte un organe de freinage (2) qui est constitué d'une part de mâchoires électriques (7) et d'au moins un patin glissant (8) montés à proximité du disque de freinage (3) de manière que ce dernier traverse au moins partiellement lesdites mâchoires électriques (7) et patin glissant (8), et d'autre part de moyens de fixation (4) des mâchoires électriques (7) et du patin glissant (8) sur le châssis fixe (6) assurant auxdites mâchoires et au dit patin des degrés de liberté obtenus par la combinaison de différentes liaisons dites « liaison appui plan AP », « liaison ponctuelle LP » et « liaison linéaire annulaire LA » afin de compenser les désalignements et les défauts de forme du disque de freinage (3) lors de son entrainement en rotation.

2. Dispositif de freinage électrique d'un arbre d'entrainement suivant la revendication 1, **caractérisé en ce que** l'organe de freinage (2) comporte une platine (10) sur laquelle sont agencés les mâchoires électriques (7) et les patins glissants (8), tandis que ladite platine (10) est guidée et retenue par rapport au châssis (6) par l'intermédiaire des différentes liaisons dites « liaison ponctuelle LP » et « liaison linéaire annulaire LA » des moyens de fixation (4).

3. Dispositif de freinage électrique d'un arbre d'entrainement suivant la revendication 2, **caractérisé en ce que** la liaison dite « liaison ponctuelle LP » des moyens de fixation (4) est réalisée par l'intermédiaire d'un premier doigt (13) solidaire du châssis (6) s'étendant perpendiculairement à ce dernier et suivant une direction horizontale et parallèle à l'axe du disque de freinage (3) de manière à coopérer avec une ouverture oblongue en forme de fourchette (15) ménagée dans la partie supérieure de la platine (10).

4. Dispositif de freinage électrique d'un arbre d'entrainement suivant la revendication 2, **caractérisé en ce que** la liaison dite « liaison linéaire annulaire LA » des moyens de fixation (4) est constituée d'un second doigt (14) solidaire du châssis (6) s'étendant perpendiculairement à ce dernier et suivant une direction horizontale et parallèle à l'axe du disque de freinage (3) et d'une rotule (16) percée en son milieu et agencée à l'intérieur d'un alésage (17) ménagé dans la partie inférieure de la platine (10) de manière que ladite rotule vienne autour du second doigt (14).

5. Dispositif de freinage électrique d'un arbre d'entrainement suivant la revendication 1, **caractérisé en ce que** la liaison dite « liaison appui plan AP » est obtenue par le montage des patins glissants (8) sur la platine (10) qui sont en contact ajusté et frottant avec le disque de freinage (3) de manière à assurer un guidage et un positionnement de l'entrefer des mâchoires électriques (7) par rapport à la position du disque de freinage (3) lors de son entrainement en rotation.

6. Dispositif de freinage électrique d'un arbre d'entrainement suivant la revendication 5, **caractérisé en ce que** chaque patin glissant (8) comporte une rainure (20) traversée par le disque de freinage (3).

7. Dispositif de freinage électrique d'un arbre d'entrainement suivant la revendication 5, **caractérisé en ce que** la rainure (20) de chaque patin glissant (8) est ajustée avec un jeu de fonctionnement compris entre 0,1 mm et 3 mm par rapport au disque de freinage solidaire de l'arbre d'entrainement.

8. Dispositif de freinage électrique d'un arbre d'entrainement suivant l'une quelconque des revendications 1 à 7, **caractérisé en ce que** l'arbre d'entrainement (5) est guidé axialement dans un châssis fixe (6) qui est constitué par les montants latéraux d'une porte de manutention à rideau souple pour assurer les déplacements de ce dernier entre une position d'ouverture et une position de fermeture.

## Patentansprüche

1. Vorrichtung zum elektrischen Bremsen einer Antriebswelle (5), die in einem festen Rahmen (6) geführt ist und wovon mindestens eines der Enden der Welle fest mit einer Bremsscheibe (3) verbunden ist, **dadurch gekennzeichnet, dass** sie ein Bremsorgan (2) aufweist, das einerseits aus elektrischen Backen (7) und mindestens einem Gleitschuh (8), die in der Nähe der Bremsscheibe (3) derart angeordnet sind, dass diese Letztere mindestens teilweise die elektrischen Backen (7) und den Gleitschuh (8) durchquert, und andererseits aus Mitteln zum Befestigen (4) der elektrischen Backen (7) und des Gleitschuhs (8) an dem festen Rahmen (6) gebildet ist, die den Backen und dem Gleitschuh Freiheitsgrade gewährleisten, die durch die Kombination von verschiedenen Verbindungen namens "flache Auflageverbindung AP", "Punktverbindung LP" und "lineare ringförmige Verbindung LA" erreicht werden, um die Fluchtungsfehler und die Formfehler der Bremsscheibe (3) während ihres Drehantriebs auszugleichen.

2. Vorrichtung zum elektrischen Bremsen einer Antriebswelle nach Anspruch 1, **dadurch gekennzeichnet, dass** das Bremsorgan (2) eine Platte (10) aufweist, auf der die elektrischen Backen (7) und die Gleitschuhe (8) angeordnet sind, während die Platte (10) gegenüber dem Rahmen (6) durch verschiedene Verbindungen namens "Punktverbindung LP" und "lineare ringförmige Verbindung LA" der Mittel zum Befestigen (4) geführt und gehalten ist.

3. Vorrichtung zum elektrischen Bremsen einer Antriebswelle nach Anspruch 2, **dadurch gekennzeichnet, dass** die Verbindung namens "Punktverbindung LP" der Mittel zum Befestigen (4) durch einen ersten Finger (13) erstellt ist, der mit dem Rahmen (6) fest verbunden ist, der sich senkrecht zu diesem Letzteren und in einer horizontalen und parallelen Richtung zu der Achse der Bremsscheibe (3) in einer Weise erstreckt, um mit einer gabelförmigen, länglichen Öffnung (15) zusammenzuwirken, die in dem oberen Teil der Platte (10) angeordnet ist.

4. Vorrichtung zum elektrischen Bremsen einer Antriebswelle nach Anspruch 2, **dadurch gekennzeichnet, dass** die Verbindung namens "lineare ringförmige Verbindung LA" der Mittel zum Befestigen (4) aus einem zweiten Finger (14), der mit dem Rahmen (6) fest verbunden ist, der sich senkrecht zu diesem Letzteren und in einer horizontalen und parallelen Richtung zu der Achse der Bremsscheibe (3) erstreckt, und einem Kugelgelenk (16) gebildet ist, das in seiner Mitte durchbohrt ist und im Inneren einer Bohrung (17) angeordnet ist, die im unteren Teil der Platte (10) derart angeordnet ist, dass das Kugelgelenk um einen zweiten Finger (14) kommt.

5. Vorrichtung zum elektrischen Bremsen einer Antriebswelle nach Anspruch 1, **dadurch gekennzeichnet, dass** die Verbindung namens "flache Auflageverbindung AP" durch die Montage der Gleitschuhe (8) auf der Platte (10) erhalten ist, die derart in angepasster und streifender Berührung mit der Bremsscheibe (3) sind, dass sie ein Führen und ein Positionieren des Luftspalts der elektrischen Backen (7) gegenüber der Position der Bremsscheibe (3) während ihres Drehantriebs gewährleisten.

6. Vorrichtung zum elektrischen Bremsen einer Antriebswelle nach Anspruch 5, **dadurch gekennzeichnet, dass** jeder Gleitschuh (8) eine Nut (20) aufweist, die von der Bremsscheibe (3) durchquert ist.

7. Vorrichtung zum elektrischen Bremsen einer Antriebswelle nach Anspruch 5, **dadurch gekennzeichnet, dass** die Nut (20) von jedem Gleitschuh (8) mit einem Betriebsspiel zwischen 0,1 mm und 3 mm gegenüber der Bremsscheibe, die mit der Antriebswelle fest verbunden ist, eingestellt ist.

8. Vorrichtung zum elektrischen Bremsen einer Antriebswelle nach einem der Ansprüche 1 bis 7, **dadurch gekennzeichnet, dass** die Antriebswelle (5) axial in einem festen Rahmen (6) geführt ist, der durch die Seitenpfosten einer Lagertüre mit flexiblem Vorhang gebildet ist, um die Verschiebungen von diesem Letzteren zwischen einer Öffnungs- und einer Schließstellung zu gewährleisten.

## Claims

1. Device for the electrical braking of a drive shaft (5) which is guided in a fixed frame (6), wherein at least one of the ends of the shaft is fixed to a brake disk (3), **characterized in that** it includes a braking element (2) which is formed, on the one hand, by electric jaws (7) and at least one sliding block (8) mounted in the proximity of the brake disk (3) in such a way that the latter passes at least partially through the electric jaws (7) and sliding block (8), and, on the other hand, by means (4) for fastening the electric jaws (7) and the sliding block (8) to the fixed frame (6) while providing the jaws and block with degrees of freedom obtained by the combination of different connections of the "flat plane contact" (FC), "point contact" (PC) and "annular linear contact" (AC) types, in order to compensate for the misalignments and defects in the shape of the brake disk (3) when the latter is driven in rotation.

2. Device for the electrical braking of a drive shaft according to Claim 1, **characterized in that** the braking element (2) includes a plate (10) on which the electric jaws (7) and the sliding blocks (8) are arranged, the plate (10) being guided and retained with respect to the frame (6) by means of the different "point contact" (PC) and "annular linear contact" (AC) connections of the fastening means (4).

3. Device for the electrical braking of a drive shaft according to Claim 2, **characterized in that** the "point contact" (PC) connection of the fastening means (4) is formed by means of a first pin (13) fixed to the frame (6) and extending perpendicularly thereto in a horizontal direction parallel to the axis of the brake disk (3), so as to interact with an oblong fork-like opening (15) formed in the upper part of the plate (10).

4. Device for the electrical braking of a drive shaft according to Claim 2, **characterized in that** the "annular linear contact" (AC) connection of the fastening means (4) is formed by a second pin (14) fixed to the frame (6) and extending perpendicularly thereto in a horizontal direction parallel to the axis of the brake disk (3), and by a swivel joint (16) pierced in its center and arranged in a bore (17) formed in the lower part of the plate (10), in such a way that the swivel joint is placed around the second pin (14).

5. Device for the electrical braking of a drive shaft according to Claim 1, **characterized in that** the "flat plane contact" (FC) connection is obtained by mounting the sliding blocks (8) on the plate (10), the blocks being in adjusted frictional contact with the brake disk (3) in such a way that the gap between the electric jaws (7) is guided and positioned relative to the position of the brake disk (3) when the latter is driven in rotation.

6. Device for the electrical braking of a drive shaft according to Claim 5, **characterized in that** each sliding block (8) includes a channel (20) through which the brake disk (3) passes.

7. Device for the electrical braking of a drive shaft according to Claim 5, **characterized in that** the channel (20) of each sliding block (8) is adjusted with an operating clearance in the range from 0.1 mm to 3 mm with respect to the brake disk which is fixed to the drive shaft.

8. Device for the electrical braking of a drive shaft according to any one of Claims 1 to 7, **characterized in that** the drive shaft (5) is guided axially in a fixed frame (6) formed by the lateral uprights of a flexible shutter goods-handling door, for the purpose of moving the door between an open position and a closed position.
